# EUROPEAN PATENT APPLICATION

(11) **EP 4 503 313 A1**
(43) Date of publication of application: **05.02.2025**
(21) Application number: 23812161.0
(22) Date of filing: 25.05.2023
(51) Int. Cl.: H01M 50/502, H01M 50/519, H01M 50/503, H01M 50/514, H01M 50/211

(54) **BATTERY MODULE**

(30) Priority: 25.05.2022 KR 20220064227; 24.05.2023 KR 20230066811
(71) Applicant: LG Energy Solution, Ltd., Seoul 07335 (KR)
(72) Inventor: LEE, Hyun Jae, Daejeon 34122 (KR)
(74) Representative: Goddar, Heinz J.
(86) International application number: PCT/KR2023/007116
(87) International publication number: WO 2023/229387

(57) **Abstract**

The present invention relates to a battery module, and the battery module according to an embodiment of the present invention includes: a cell stack in which a plurality of battery cells are stacked; a module housing configured to accommodate the cell stack therein; a module connector which is electrically connected to the cell stack and of which one side is provided to be exposed to the outside of the module housing so that an external connector is connected; and a fixing part configured to fix a position of the module connector, wherein the module connector includes: a connector part into which the external connector is inserted to be connected; and a connector PCB having a first portion to which the connector part is fixed and a second portion connected to the first portion, wherein the fixing part includes: a first fixing part configured to fix the first portion and provided with a hook protrusion into which an end of the first portion is inserted to fix a position of the end of the first portion; and a second fixing part configured to fix the second portion.

## Description

### TECHNICAL FIELD

### CROSS-REFERENCE TO RELATED APPLICATION

The present application claims the benefit of the priority of Korean Patent Application Nos. 10-2022-0064227, filed on May 25, 2022, and 10-2023-0066811, filed on May 24, 2023, which are hereby incorporated by reference in their entirety.

### TECHNICAL FIELD

The present invention relates to a battery module.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

Secondary batteries are attracting much attention as energy sources for power devices such as electric bicycle, electric vehicles, and hybrid electric vehicles as well as mobile devices such as mobile phones, digital cameras, and laptops.

A small-sized battery pack in which one battery Full length is packed is used for small devices such as mobile phones and cameras, but a battery pack in which two or more Full length cells are connected in parallel and/or series is used for medium and large-sized devices such as laptop computers and electric vehicles. Thus, the number of battery cells provided in the battery pack may be variously set according to the required output voltage or charge/discharge capacity.

When the battery pack is configured by connecting a plurality of battery cells in series/parallel, a method in which a battery module constituted by at least one battery cell is configured first, and other components are added using the at least one battery module to constitute the battery pack is common.

That is, a battery is constituted by cells, which are the smallest units, and since a pouch-type cell requires structural rigidity, a module including a plurality of cells is provided as an intermediate unit, and then, a plurality of modules are provided to constitute a pack.

The module transmits cell information to the pack through a connector and has a structure in which the connector is exposed from the module for ease of assembling.

When assembling the connector, if force is not applied horizontally to an inlet, but some force is received in a diagonal direction, the connector is exposed to damage, which needs to be structurally improved.

### DISCLOSURE OF THE INVENTION

### TECHNICAL PROBLEM

One aspect of the present invention is to provide a battery module capable of stably fixing a module connector in three-axis directions.

### TECHNICAL SOLUTION

A battery module according to an embodiment of the present invention may include: a cell stack in which a plurality of battery cells are stacked; a module housing configured to accommodate the cell stack therein; a module connector which is electrically connected to the cell stack and of which one side is provided to be exposed to the outside of the module housing so that an external connector is connected; and a fixing part configured to fix a position of the module connector, wherein the module connector may include: a connector part into which the external connector is inserted to be connected; and a connector PCB having a first portion to which the connector part is fixed and a second portion connected to the first portion, wherein the fixing part may include: a first fixing part configured to fix the first portion and provided with a hook protrusion into which an end of the first portion is inserted to fix a position of the end of the first portion; and a second fixing part configured to fix the second portion.

### ADVANTAGEOUS EFFECTS

According to the present invention, the module connector that transmits the information of the battery cell may be fixed in the three-axis directions by using the fixing part including the first fixing part and the second fixing part so as to be stably fixed.

In addition, the first fixing part may include the pair of hook protrusions to fix the module connector in the first direction without being separated, and the second fixing part may include the coupling protrusion to fix the module connector in the second and third directions without being separated. Thus, when the external connector is coupled (assembled) to the module connector, the module connector may be prevented from being shaken, and the fixed portion of the module connector may be prevented from being damaged.

### BRIEF DESCRIPTION OF THE DRAWINGS

FIG. 1 is a perspective view illustrating a battery module according to an embodiment of the present invention.
FIG. 2 is a perspective view illustrating a cell stack in the battery module according to an embodiment of the present invention.
FIG. 3 is an exploded perspective view illustrating a main part of the battery module according to an embodiment of the present invention.
FIG. 4 is a perspective view illustrating a state in which a module connector is mounted in the battery module according to an embodiment of the present invention.
FIG. 5 is a perspective view illustrating the module connector and an external connector in the battery module according to an embodiment of the present invention.
FIG. 6 is a perspective view illustrating a state before the module connector is mounted in the battery module according to an embodiment of the present invention.
FIG. 7 is a perspective view illustrating a first fixing part in the battery module according to an embodiment of the present invention.
FIG. 8 is a front view illustrating the module connector and a busbar frame in the battery module according to an embodiment of the present invention.
FIG. 9 is a front view illustrating the module connector in the battery module according to an embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

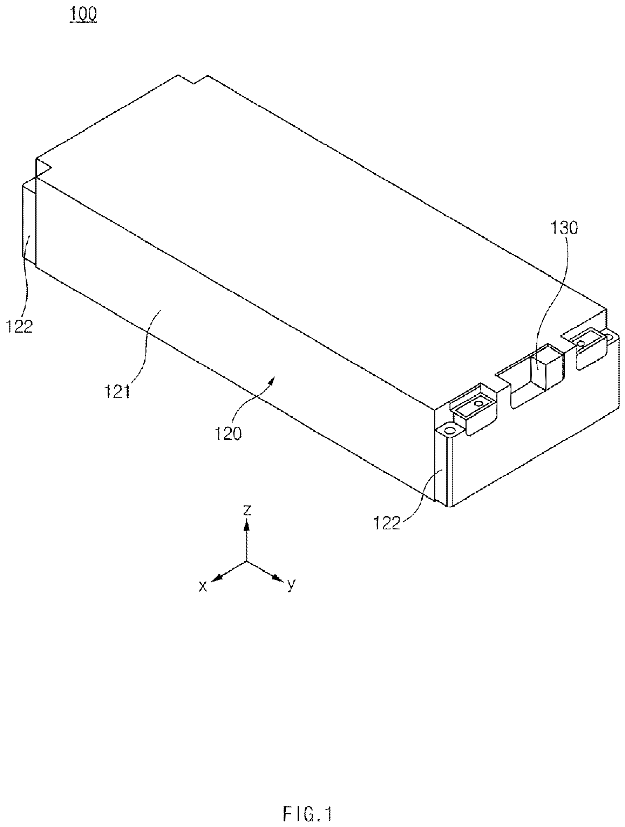

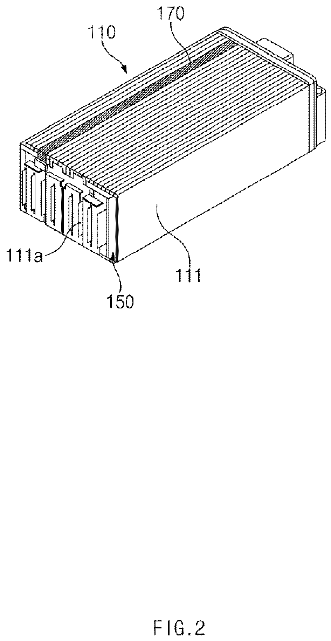

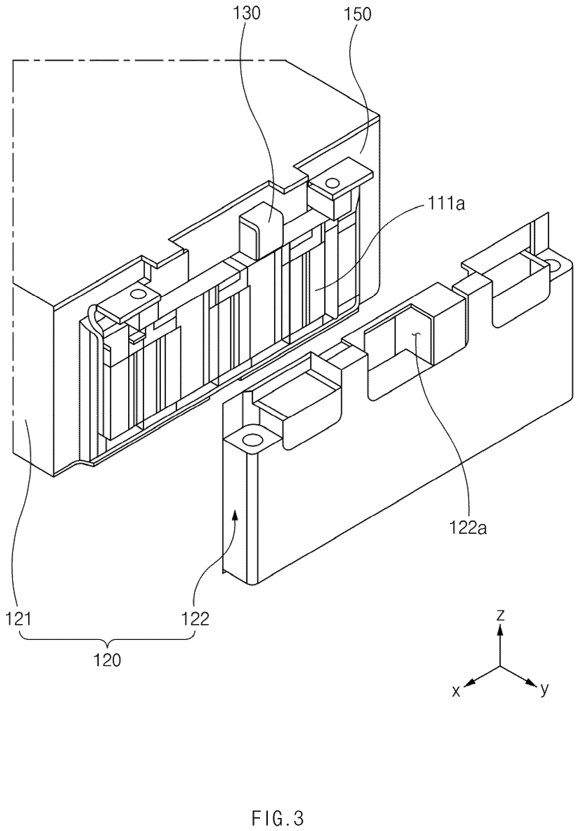

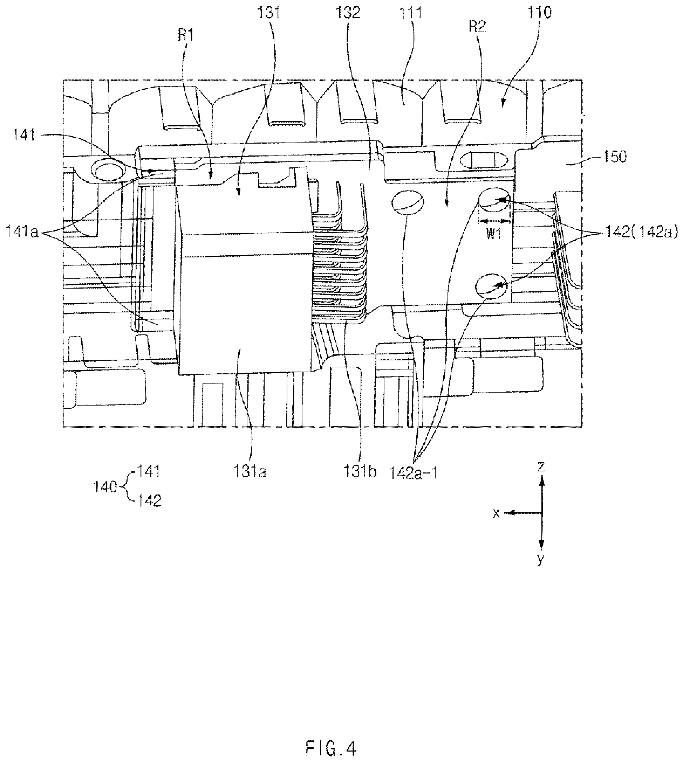

FIG. 1 is a perspective view illustrating a battery module according to an embodiment of the present invention, FIG. 2 is a perspective view illustrating a cell stack in the battery module according to an embodiment of the present invention, FIG. 3 is an exploded perspective view illustrating a main part of the battery module according to an embodiment of the present invention, and FIG. 4 is a perspective view illustrating a state in which a module connector is mounted in the battery module according to an embodiment of the present invention.

Referring to FIGS. 1 to 4, a battery module 100 according to an embodiment of the present invention may be a battery module 100 and includes a cell stack 110 in which a plurality of battery cells 111 are stacked, a module housing 120 accommodating the cell stack 110 therein, a module connector 130 which is electrically connected to the cell stack 110 and of which one side is provided to be exposed to the outside of the module housing 120 so as to be connected to an external connector C, and a fixing part 140 that fixes a position of the module connector 130. In addition, the battery module 100 according to an embodiment of the present invention may further include a pair of busbar frames 150 and a flexible printed circuit board 170.

In more detail, referring to FIG. 2, the cell stack 110 may provide a stack in which a plurality of battery cells 111 are stacked.

Each of the battery cells 111 may include an electrode assembly, an electrolyte, and a pouch accommodating the electrode assembly and electrolyte therein.

The electrode assembly may be a chargeable and dischargeable power generating element, and electrodes and separators may be alternately stacked in the electrode assembly 20. Here, the electrodes may include a positive electrode and a negative electrode, and the positive electrode, the separators, and the negative electrode may be alternately stacked. here, each of the separators separates the positive electrode from the negative electrode to electrically insulate the positive electrode from the negative electrode.

The positive electrode may comprise a positive electrode collector and a positive electrode active material stacked on the positive electrode collector.

The positive electrode collector may be made of an aluminum foil.

The positive electrode active material may comprise lithium manganese oxide, lithium cobalt oxide, lithium nickel oxide, lithium iron phosphate, or a compound or mixture containing at least one of the above-described materials.

The negative electrode may comprise a negative electrode collector and a negative active material stacked on the negative electrode collector.

The negative electrode collector may be made of, for example, a foil made of a copper (Cu) material.

The negative active material may be a compound or a mixture containing a graphite-based material.

The separator is made of an insulating material to electrically insulates the positive electrode and the negative electrode from each other. Here, the separator 124 may be made of a polyolefin-based resin film such as polyethylene or polypropylene having micropores.

The battery cell 111 may further include an electrode lead 111a having one side connected to the electrode of the electrode assembly and the other side extending to the outside of the pouch.

The electrode lead 111a may comprise a positive electrode lead connected to the positive electrode and a negative electrode lead connected to the negative electrode.

Referring to FIGS. 1 and 3, the module housing 120 may accommodate the cell stack 110 therein.

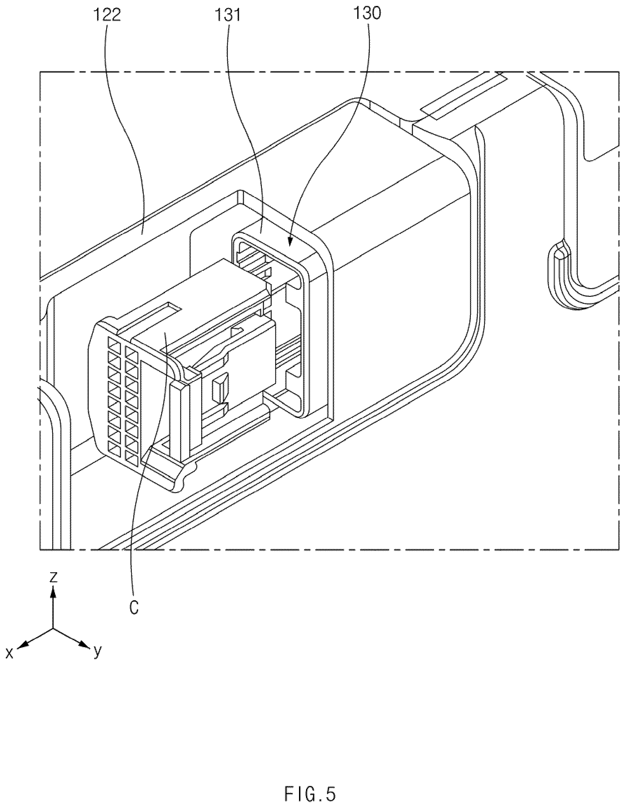

The module housing 120 may include a tubular case 121 with both sides opened, and an end plate 122 covering each of both the opened sides of the case 121. Here, one side of the module connector 130 may be exposed to the outside of the end plate 122. The end plate 122 may have a through-hole 122a through which one side of the module connector 130 passes (see FIG. 5).

FIG. 5 is a perspective view illustrating the module connector and the external connector in the battery module according to an embodiment of the present invention.

Referring to FIGS. 4 and 5, the module connector 130 may be electrically connected to the cell stack 110 and have one side exposed to the outside of the module housing 120 so that the external connector C is connected thereto.

The module connector 130 may include a connector part 131 into which the external connector C is inserted and connected, and a connector PCB (printed circuit board) 132 to which the connector part 131 is fixed.

The connector part 131 may include a connection part 131a into which the external connector C is inserted and a connection line 131b electrically connecting the connection part 131a to the connector PCB 132.

The connector PCB 132 may have a coupling hole 132a penetrated in a first direction, that is, a Y-axis direction. Here, the coupling hole 132a may be provided in plurality. Here, the first direction may be a direction perpendicular to the connector PCB 132. That is, the first direction may be a direction perpendicular to a plane of the plate-shaped PCB 132.

In addition, the connector PCB 132 includes a first portion R1 to which the connector part 131 is fixed and a second portion R2 connected to the first part R1.

The external connector C may be provided as a battery pack connector. In addition, information of the battery cell 111 may be transmitted from the module connector 130 to the battery pack through the battery pack connector. Here, the battery pack connector may be connected to a battery management system (BMS) of the battery pack. Here, an electrical connection line such as a low voltage (LV) line electrically connecting the battery pack connector to the BMS may be provided. Thus, information such as voltage or current of the battery cell 111 may be transmitted from the battery pack connector to the BMS of the battery pack through the module connector 130 electrically connected to the battery cell 111.

The battery pack may include the battery module 100, the BMS, and a pack case accommodating the battery module 100 and the BMS.

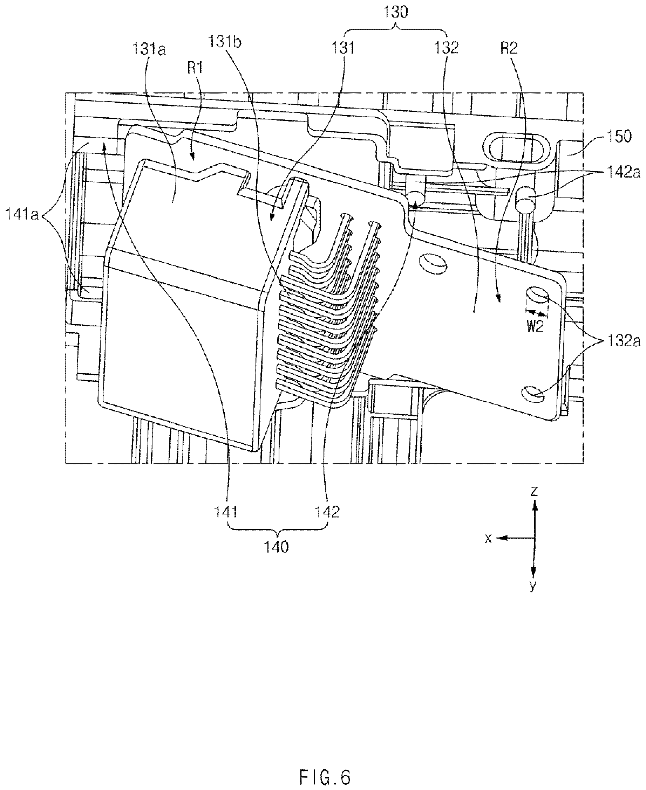

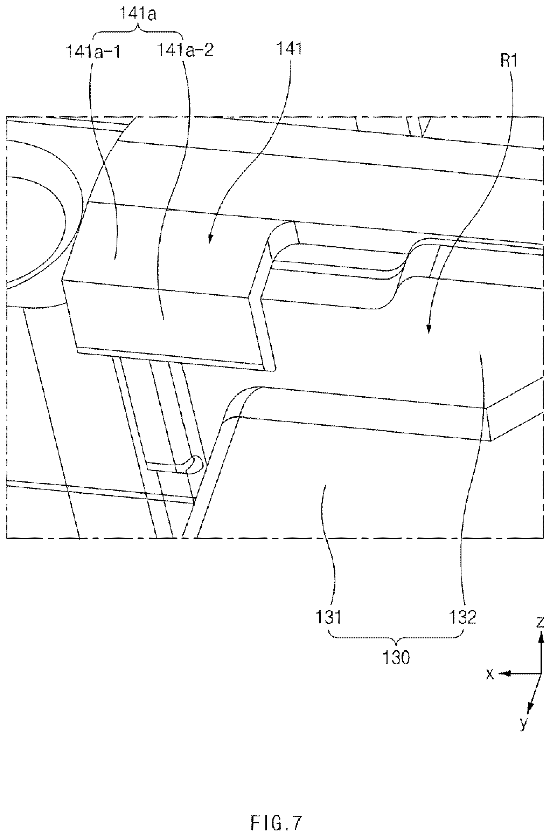

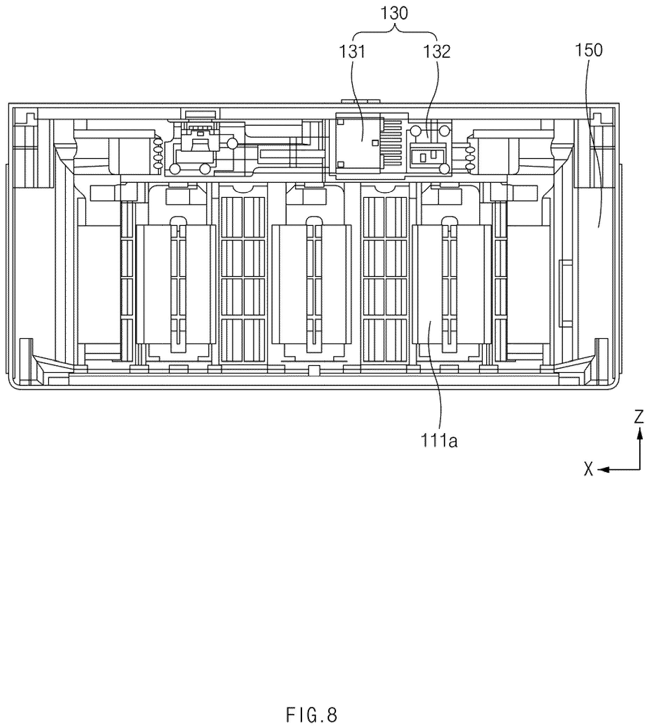

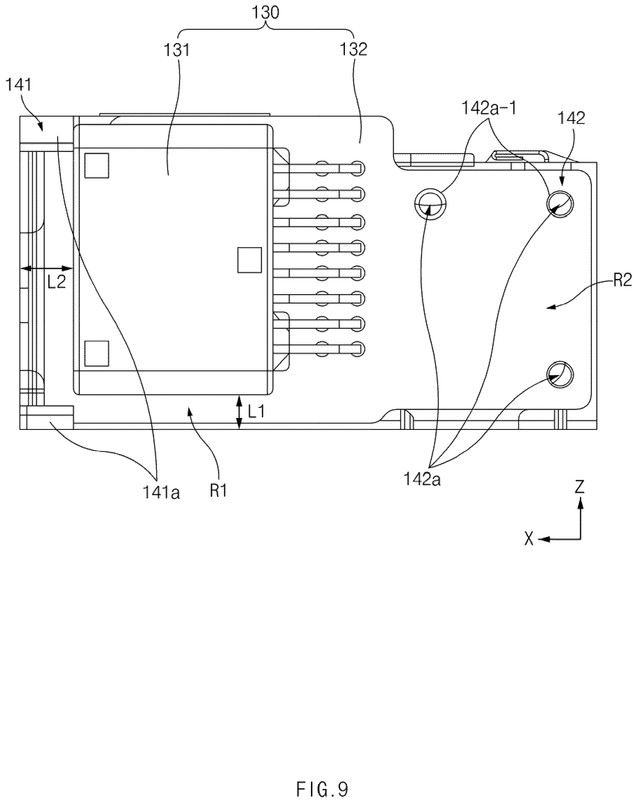

FIG. 6 is a perspective view illustrating a state before the module connector is mounted in the battery module according to an embodiment of the present invention, FIG. 7 is a perspective view illustrating a first fixing part in the battery module according to an embodiment of the present invention, FIG. 8 is a front view illustrating the module connector and the busbar frame in the battery module according to an embodiment of the present invention, and FIG. 9 is a front view illustrating the module connector in the battery module according to an embodiment of the present invention.

Referring to FIGS. 6 to 9, the fixing part 140 may fix a position of the module connector 130.

In addition, the fixing part 140 may include a first fixing part 141 that fixes the first portion of the connector PCB 132 and having a hook protrusion 141a into which an end of the first portion R1 is inserted to fix a position of an end of the first portion R1, and a second fixing part 142 that fixes the second portion R2 of the connector PCB 132.

The first fixing part 141 may fix the connector PCB 132 in a first direction (Y axis) perpendicular to the connector PCB 132, and the second fixing part 142 may fix the connector PCB 132 in a second direction (X axis) and a third direction (Z axis), which are parallel to the connector PCB 132. Here, an end of the connector PCB 132 may be provided in a shape that is inserted into the hook protrusion 141a in the second direction so that the end of the first portion R1 is prevented from being lifted with respect to the module housing 120.

Here, the second direction may be a width direction of the battery module 100, the first direction may be a length direction of the battery module 100, and the third direction may be a height direction of the battery module 100 (see FIG. 1).

The first fixing part 141 may fix the connector PCB 132 in a first direction (first) perpendicular to the connector PCB 132, and the second fixing part 142 may fix the connector PCB 132 in a second direction (second) and a third direction (third), which are parallel to the connector PCB 132.

In addition, the second fixing part 142 may include a coupling protrusion 142a which protrudes in the first direction and into which a coupling hole 132a defined in the connector PCB 132 is inserted.

The coupling protrusion 142a may be provided in the form of a cylinder or a quadrangular pillar. Here, the coupling protrusion 142a may be provided in plurality.

The coupling protrusion 142a may be further provided with a separation prevention part 142a-1, which has a width greater than that the coupling hole 132a, at an end thereof so as to be prevented from be separated in the first direction. Here, for example, in the separation prevention part 142a-1, although the coupling protrusion 142a is provided in a cylindrical shape with a constant diameter (see FIG. 6) before the coupling protrusion 142a is inserted into the coupling hole 132a, after the coupling protrusion 142a is inserted into the coupling hole 132a, the separation prevention part 142a-1 that presses an end of the coupling protrusion 142a so as to have a width W1 greater than a width W2 of the coupling hole 132a may be provided (see FIG. 4). Here, the coupling protrusion 142a may include, for example, a plastic material.

The hook protrusion 141a may be provided in a pair and bent in an "L" shape in directions facing each other. In addition, the pair of lock protrusions 141a may be provided at positions that are in contact with both ends of the connector PCB 132 in the first direction.

In addition, the hook protrusion 141a may include a first extension portion 141a-1 extending in the first direction and a second extension portion 141a-2 extending in a direction parallel to the third direction from an end of the first extension portion 141a-1.

Here, the end of the connector PCB 132 may be prevented from being separated in the first direction by the second extension portion 141a-2 of the hook protrusion 141a.

A width difference L1 between the end of the connector PCB 132 and the end of the connector part 131 in the third direction, that is, the Z-axis direction, may be, for example, 2 mm to 4 mm. In addition, a width difference L2 between the end of the connector PCB 132 and the end of the connector part 131 in the X-axis direction that is the second direction may be, for example, 2 mm to 4 mm.

Therefore, a distance between the end of the connector PCB 132 and the end of the connector part 131 in the second and third directions may be formed to be 2 mm or more, which is the lower limit, and thus, an installation space of the hook protrusion 141a may be secured.

Furthermore, the distance between the end of the connector PCB 132 and the end of the connector part 131 in the second and third directions is formed to be 4 mm or less, which is the lower limit, to improve space efficiency, reduce material costs, and easily install the module connector 130 on the end plate 122. Here, when the distance between the end of the connector PCB 132 and the end of the connector part 131 is 4 mm or less, the hook protrusion 141a may be installed on a portion on, which a fixing means such as a screw is not installed, to prevent the end of the connector PCB 132 from being lifted.

Referring to FIGS. 2 to 4, the busbar frame 150 may be disposed at each of both ends of the cell stack 110 and connected to the electrode lead 111a of the battery cell 111. Here, the fixing part 140 may be provided on the busbar frame 150 so that the module connector 130 is coupled to the busbar frame 150.

In addition, the busbar frame 150 may include a busbar made of a conductive material electrically connected to the electrode lead 111a of the battery cell 111. Here, for example, the connector PCB 132 of the module connector 130 may be electrically connected to the busbar frame 150 by being soldered to the busbar of the busbar frame 150.

The flexible circuit board 170 may be connected to a pair of busbar frames 150. Here, the flexible printed circuit board 170 may be electrically connected to, for example, the busbar of the busbar frame 150.

In addition, the flexible printed circuit board 170 may be connected to the pair of busbar frames 150 along a top surface of the cell stack 110. Here, the flexible printed circuit board 170 may sense a temperature of the cell stack 110 by including a temperature sensor.

The battery module 100 according to an embodiment of the present invention configured as described above may fix the module connector 130, which transmits information of the battery cell 111, through the fixing part 140 including the first fixing part 141 and the second fixing part 142 in three-axis directions to stably fix the module connector 130.

In addition, the first fixing part 141 may include the pair of hook protrusions 141a to fix the module connector 130 so as not to be separated in the first direction, and the second fixing part 142 may include the coupling protrusion 142a to fix the module connector 130 in the second and third directions so as not to be separated. Thus, when the external connector C is coupled (assembled) to the module connector 130, the module connector 130 may be prevented from being shaken, and the fixed portion of the module connector 130 may be prevented from being damaged.

While the present invention has been particularly shown and described with reference to exemplary embodiments thereof, it is to be understood that the scope of the present invention is not limited thereto. It will be understood by those of ordinary skill in the art that various changes in form and details may be made therein without departing from the spirit and scope of the present invention.

Furthermore, the scope of protection of the present invention will be clarified by the appended claims.

### [DESCRIPTION OF THE SYMBOLS]

100: Battery module
110: Cell stack
111: Battery cell
111a: Electrode lead
120: Module housing
121: Case
122: End plate
130: Module connector
131: Connector part
132: Connector PCB (Printed Circuit Board)
132a: Coupling hole
140: Fixing part
141: First fixing part
141a: Hook protrusion
142: Second fixing part
142a: Coupling protrusion
150: Busbar frame
170: Flexible circuit board
C: External connector

## Claims

1. A battery module comprising:
a cell stack in which a plurality of battery cells are stacked;
a module housing configured to accommodate the cell stack therein;
a module connector which is electrically connected to the cell stack and of which one side is provided to be exposed to the outside of the module housing so that an external connector is connected; and
a fixing part configured to fix a position of the module connector,
wherein the module connector comprises:
a connector part into which the external connector is inserted to be connected; and
a connector PCB having a first portion to which the connector part is fixed and a second portion connected to the first portion,
wherein the fixing part comprises:
a first fixing part configured to fix the first portion and provided with a hook protrusion into which an end of the first portion is inserted to fix a position of the end of the first portion; and
a second fixing part configured to fix the second portion.

2. The battery module of claim 1, wherein the first fixing part is configured to fix the connector PCB in a first direction (Y axis) perpendicular to the connector PCB, and
the second fixing part is configured to fix the connector PCB in a second direction (X axis) and a third direction (Z axis), which are parallel to the connector PCB and perpendicular to each other.

3. The battery module of claim 2, wherein the second direction is a width direction of the battery module, the first direction is a length direction of the battery module, and the third direction is a height direction of the battery module.

4. The battery module of claim 2, wherein the connector PCB has a coupling hole penetrated in the first direction, and
the second fixing part comprises a coupling protrusion which protrudes in the first direction and is inserted into the coupling hole.

5. The battery module of claim 4, wherein the coupling protrusion is provided in the form of a cylinder or a quadrangular pillar.

6. The battery module of claim 4, wherein each of the coupling hole and the coupling protrusion is provided in plurality.

7. The battery module of claim 4, wherein the coupling protrusion further comprises a separation prevention part, which has a width greater than that of the coupling hole, at an end thereof so as to be prevented from being separated in the first direction.

8. The battery module of claim 7, wherein the coupling protrusion comprises a plastic material.

9. The battery module of claim 2, wherein an end of the connector PCB is inserted into the hook protrusion in the second direction to prevent an end of the first portion from being lifted with respect to the module housing.

10. The battery module of claim 9, wherein the hook protrusion is provided in a pair, which are bent in an "L" shape in directions facing each other.

11. The battery module of claim 10, wherein the pair of hook protrusions are provided at positions that are in contact with both ends of the connector PCB in the first direction.

12. The battery module of claim 10, wherein the hook protrusion comprises:
a first extension portion extending in the first direction; and
a second extension portion extending in a direction parallel to the third direction from an end of the first extension portion,
wherein the end of the connector PCB is prevented from being separated in the first direction by the second extension portion of the hook protrusion.

13. The battery module of claim 1, further comprising a pair of busbar frames disposed at both ends of the cell stack and connected to an electrode lead of the battery cell,
wherein the fixing part is disposed on the busbar frame so that the module connector is coupled to the busbar frame.

14. The battery module of claim 13, wherein the external connector is provided as a battery pack connector, and
information of the battery cell is transmitted from the module connector to a battery pack through the battery pack connector.

15. The battery module of claim 1, wherein the module housing comprises:
a tubular case with both sides opened; and
an end plate configured to cover each of both the opened sides of the case,
wherein one side of the module connector is exposed to the outside of the end plate.
